# EUROPEAN PATENT APPLICATION

(11) **EP 4 488 029 A1**
(43) Date of publication of application: **08.01.2025**
(21) Application number: 22929924.3
(22) Date of filing: 19.10.2022
(51) Int. Cl.: B29C 45/18, B29B 7/14

(54) **FEEDER AND INJECTION MOLDING MACHINE**

(30) Priority: 03.03.2022 JP 2022032299
(71) Applicant: The Japan Steel Works, Ltd., Tokyo 141-0032 (JP)
(72) Inventor: UMEDA, Mitsuhide, Tokyo 141-0032 (JP); CHIBA, Hideki, Tokyo 141-0032 (JP); KUNIHIRO, Daisuke, Tokyo 141-0032 (JP); NAKASHIMA, Hideaki, Tokyo 141-0032 (JP)
(74) Representative: Simmons & Simmons LLP (Munich)
(86) International application number: PCT/JP2022/038939
(87) International publication number: WO 2023/166780

(57) **Abstract**

A feeder (102) according to one embodiment comprises: a weighing feeder (10) having a hopper (11) to which a feedstock is supplied, and a discharge port (13) from which the feedstock is discharged; and a volume feeder (30) having a hopper (31) to which the feedstock discharged from the discharge port (13) is supplied, and a discharge port (33) from which said feedstock is discharged. The volume feeder (30) repeatedly carries out discharging of the feedstock from discharge port (33) and stopping of the discharging. The weighing feeder (10) continuously discharges the feedstock from the discharge port (13) to the hopper (31) during a prescribed continuous period of time including the discharging of the feedstock from discharge port (33) and the stopping of the discharging.

## Description

### Technical Field

The present invention relates to a feeder and an injection molding machine.

### Background Art

Patent Literature 1 discloses an injection molding machine in which a raw material containing a material for performing injection molding is supplied from a hopper to a cylinder by controlling intermittent operations performed by a weight-type feeder.

### Citation List

### Patent Literature

Patent Literature 1: Japanese Patent No. 4554103

### Summary of Invention

### Technical Problem

When injection molding is performed by injecting a raw material into a mold, there are cases where the amount, concentration, and the like of materials contained in the raw material vary, and the quality of the molded article deteriorates. It has been desired to perform injection molding by injecting a raw material containing predetermined amounts of materials.

Other problems to be solved and novel features will become apparent from descriptions in this specification and accompanying drawings.

### Solution to Problem

A feeder according to an embodiment includes: a weight-type feeder including a first hopper to which a raw material is supplied, and a first discharging port from which the raw material is discharged; and a volume-type feeder including a second hopper to which the raw material discharged from the first discharging port is supplied, and a second discharging port from which the raw material is discharged.

An injection molding machine according to an embodiment includes the above-described feeder.

### Advantageous Effects of Invention

According to the above-described embodiment, it is possible to provide a feeder and an injection molding machine capable of performing injection molding by injecting a raw material containing predetermined amounts of materials.

### Brief Description of Drawings

Fig. 1 is a schematic cross-sectional diagram showing an example of an injection molding machine according to a comparative example;
Fig. 2 is a schematic cross-sectional diagram showing an example of an injection molding machine according to a first embodiment;
Fig. 3 is a schematic cross-sectional diagram showing an example of a feeder in the injection molding machine according to the first embodiment;
Fig. 4 is a schematic cross-sectional diagram showing an example of an injection molding machine according to another example of the first embodiment;
Fig. 5 is a schematic cross-sectional diagram showing an example of a feeder in an injection molding machine according to a second embodiment;
Fig. 6 is a schematic cross-sectional diagram showing an example of a hopper in the injection molding machine according to the second embodiment;
Fig. 7 is a schematic cross-sectional diagram showing an example of a feeder in an injection molding machine according to a third embodiment; and
Fig. 8 is a schematic cross-sectional diagram showing an example of a hopper in the injection molding machine according to the third embodiment.

### Description of Embodiments

For clarifying the explanation, the following description and the drawings are partially omitted and simplified as appropriate. Further, the same reference numerals (or symbols) are assigned to the same elements throughout the drawings, and redundant descriptions thereof are omitted as appropriate.

### (Comparative Example)

Prior to describing an injection molding machine and a feeder according to the embodiment, an injection molding machine and a feeder according to a comparative example and their problems will be described. In this way, the injection molding machine and the feeder according to this embodiment will be understood more clearly.

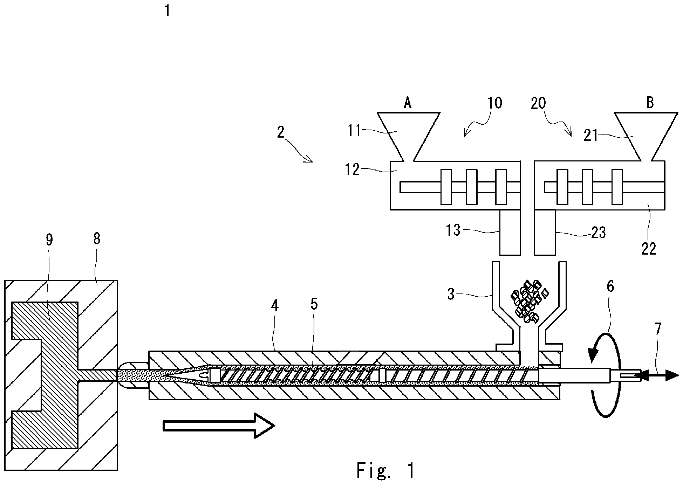

Fig. 1 is a schematic cross-sectional diagram showing an example of an injection molding machine according to a comparative example. As shown in Fig. 1, the injection molding machine 1 according to the comparative example includes a feeder 2, a hopper 3, a cylinder 4, a screw 5, a rotational driving unit 6, and an injection driving unit 7. In the injection molding machine 1, a raw material is supplied from the feeder 2 into the cylinder 4 through the hopper 3. The raw material contains one type of material or a plurality of types of materials. The raw material supplied into the cylinder 4 is melted by the rotation of the screw 5 while being heated in the cylinder 4. The rotational driving unit 6 melts and stirs the raw material in the cylinder 4 by rotating the screw 5. The injection driving unit 7 injects a predetermined amount of the raw material melted in the cylinder 4 into a cavity 9 of a mold 8 in an intermittent manner, i.e., one shot after another. In this way, the injected molten raw material is solidified in the mold 8, so that a molded article is formed. Examples of feeders that can be used as the feeder 2 for supplying a raw material for injection molding into the hopper 3 include a volume-type feeder and a weight-type feeder.

The volume-type feeder supplies a predetermined volume of raw material. For example, the volume-type feeder supplies a fixed volume of raw material per unit time by a screw or the like that rotates at a constant rotational speed inside the feeder. However, in the volume-type feeder, since the amount of material to be supplied is set by the frequency or the like of the rotation of the screw, the actual amount of supplied material cannot be known. Therefore, the amount of raw material that is injected into the cavity 9 of the mold 8 in one shot varies. Further, in the case of a process in which the volume of a dry-blended raw material is measured and supplied by using such a volume-type feeder, and the raw material consists of a mixture of materials having different bulk densities, there is a risk that these materials having different bulk densities may be classified (i.e., separated) when they are dry-blended, and as a result, the raw material may be supplied at a mixing ratio different from the desired ratio.

The injection molding machine 1 according to the comparative example uses weight-type feeders 10 and 20 as the feeders 2. Each of the weight-type feeders 10 and 20 supplies a predetermined weight of raw material. For example, when each of the weight-type feeders 10 and 20 supplies a raw material by using a screw or the like rotating at a constant rotational speed inside the feeder, it supplies a predetermined weight of raw material per unit time, measured by a load cell or the like. In the case where the weight-type feeder intermittently supplies the raw material to the hopper 3 in synchronization with intermittent injections of the injection molding machine 1, it repeats the supplying of a predetermined weight of raw material, performed within a predetermined time period and the stopping of the supplying.

The weight-type feeder 10 includes a hopper 11, a body part 12, and a discharging port 13. The raw material is supplied to the hopper 11. The body part 12 includes a discharging mechanism for discharging a predetermined weight of raw material by a screw or the like, and a sensor such as a load cell for measuring the weight of the discharged raw material. The raw material is discharged from the discharging port 13. Similarly, the weight-type feeder 20 includes a hopper 21, a body part 22, and a discharging port 23.

Examples of types of the weight-type feeders 10 and 20 include a screw feeder, a table feeder, a vibration feeder, and a circle feeder. The screw feeder is a feeder that discharges a raw material by extruding the material by a screw. The table feeder is a feeder that discharges a raw material by measuring (e.g., weighing) the raw material which is put into a certain container in a levelled-off state. The vibration feeder is a feeder that discharges a raw material by vibrations. The circle feeder is a feeder that discharges a raw material from a cylindrical container.

A raw material containing a material A is supplied from the hopper 11 to the weight-type feeder 10. The weight-type feeder 10 supplies the raw material containing the material A from the discharging port 13 into the hopper 3 of the injection molding machine 1. A raw material containing a material B is supplied from the hopper 21 to the weight-type feeder 20. The weight-type feeder 20 supplies the raw material containing the material B from the discharging port 23 into the hopper 3 of the injection molding machine 1. The raw material may contain a plurality of materials having different bulk densities.

Note that the materials are not limited to two types of the materials A and B. That is, only one type of material may be used, or three or more types of materials may be used. Further, the feeder 2 may not be limited to those consisting of two weight-type feeders 10 and 20, and may include only one weight-type feeder 10 or may include three or more weight-type feeders 10.

In each of the weight-type feeders 10 and 20, when the internal screw or the like is intermittently rotated and stopped in synchronization with intermittent injections of the injection molding machine 1, the amount of supplied material immediately after the rotation of the screw or the like and immediately after the stopping thereof varies. As a result, even in the injection molding machine 1, which performs intermittent operations, the supply of raw material becomes unstable at every one cycle of the injection and stop thereof of one shot. Further, the variations in the amount of supplied material from the feeder 2 affects the variations in the mixing ratio of the materials A and B and the variations in the measuring time (e.g., weighing time) of the injection molding machine 1. As a result, it becomes difficult to inject a predetermined amount of raw material for molding.

### (First Embodiment)

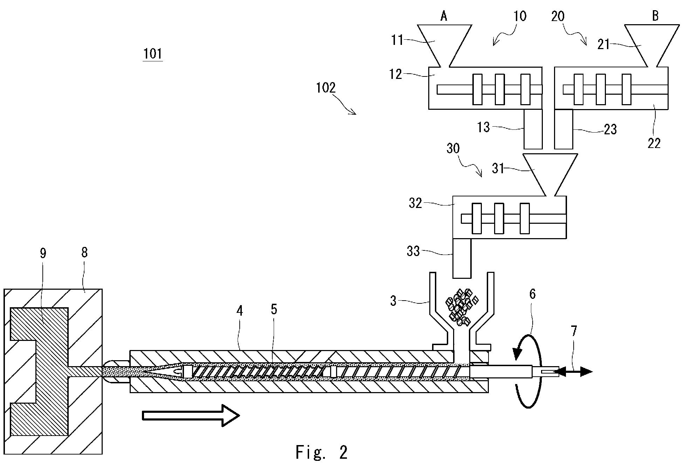

Next, an injection molding machine and a feeder according to a first embodiment will be described. Fig. 2 is a cross-sectional diagram showing an example of an injection molding machine according to the first embodiment. As shown in Fig. 1, the injection molding machine 101 according to this embodiment includes a feeder 102, a hopper 3, a cylinder 4, a screw 5, a rotational driving unit 6, and an injection driving unit 7. The configuration of the injection molding machine 101 is similar to that in the comparative example, except for the feeder 102. The feeder 102 according to this embodiment further includes a volume-type feeder 30 in addition to the weight-type feeders 10 and 20.

The volume-type feeder 30 includes a hopper 31, a body part 32 and a discharging port 33. A raw material is supplied to the hopper 31. The body part 32 includes a discharging mechanism for discharging a predetermined volume of raw material, and a sensor, such as a load cell, that measures the volume of the discharged raw material based on the frequency of the screw or the like. The raw material is discharged from the discharging port 33. The weight-type feeders 10 and 20 supply the raw materials through the discharging ports 13 and 23, respectively, to the hopper 31 of the volume-type feeder 30. The raw materials discharged from the discharging ports 13 and 23, respectively, are then supplied from the hopper 31 to the volume-type feeder 30. The volume-type feeder 30 then supplies the raw material from the discharging port 33 to the hopper 3 of the injection molding machine 1.

The volume-type feeder 30 repeats the discharging of the raw material from the discharging port 33 and the stopping of the discharging in synchronization with intermittent injections of the raw material into the mold 8, performed one shot after another by the injection molding machine 101. Meanwhile, the weight-type feeders 10 and 20 continuously supply the raw materials to the volume-type feeder 30. Specifically, the weight-type feeders 10 and 20 continuously discharge the raw materials from the discharging ports 13 and 23 to the hopper 31 during a predetermined continuous period during which the discharging of the raw material from the discharging port 33 of the volume-type feeder 30 and the stopping of the discharging are performed.

In the case where the volume-type feeder 30 is not provided, i.e., only the weight-type feeders 10 and 20 are provided, as in the comparative example, it is necessary to operate the weight-type feeders 10 and 20 so as to intermittently discharge the raw materials and stop the discharging in synchronization with the intermittent operations of the injection molding machine 1. The amounts of materials discharged by the weight-type feeders 10 and 20 immediately before the start and stop of the rotation of the screws or the like vary, so that the accuracy of the amount of material supplied to the injection molding machine 1 deteriorates. Therefore, it is desirable to continuously operate the weight-type feeders 10 and 20 as much as possible when performing injection molding. In this embodiment, the volume-type feeder 30 is synchronized with the intermittent operations of the injection molding machine 101. As a result, the weight-type feeders 10 and 20 can be continuously operated, thus making it possible to reduce the variations in the amount of supplied raw material.

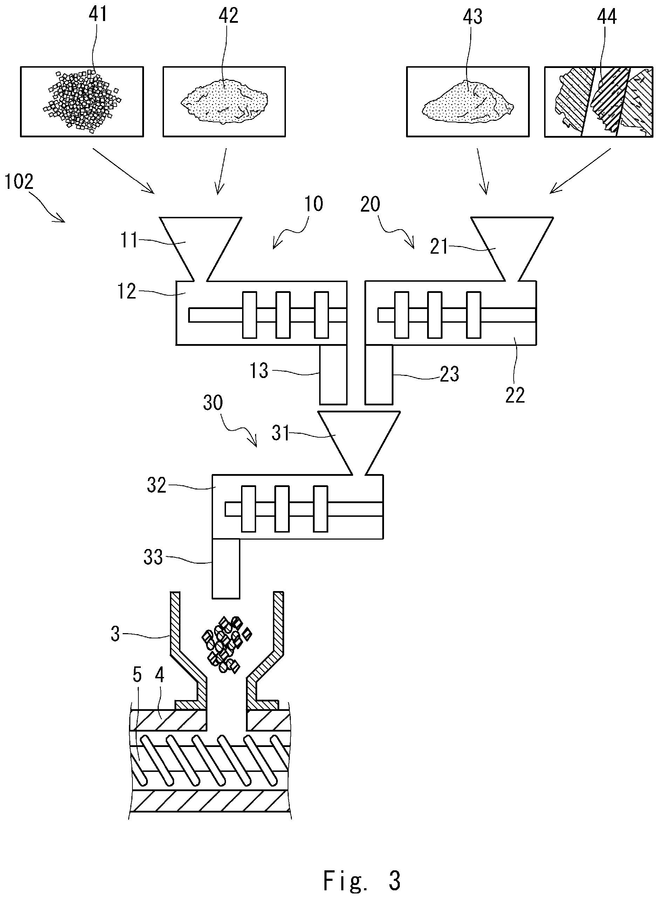

Fig. 3 is a cross-sectional diagram showing an example of the feeder 2 in the injection molding machine 1 according to the first embodiment. As shown in Fig. 3, the materials contained in the raw material supplied by the feeder 102 into the hopper 3 may include at least one of general-purpose resin pellets 41, a resin powder 42, milled fibers 43, and chopped fibers 44. The general-purpose resin pellets 41 are pellets made of a general-purpose resin. The resin powder 42 is a powder of a resin. The milled fibers 43 are, for example, those obtained by pulverizing fibers such as carbon fibers or glass fibers. The chopped fibers 44 are those obtained by mincing a bunch of fibers such as carbon fibers. The above-described materials may have bulk densities different from one another. Note that the materials are not limited to the general-purpose resin pellets 41, the resin powder 42, the milled fibers 43, and the chopped fibers 44 as long as they can be melted in the cavity 9 of the mold 8 and injected therefrom for molding.

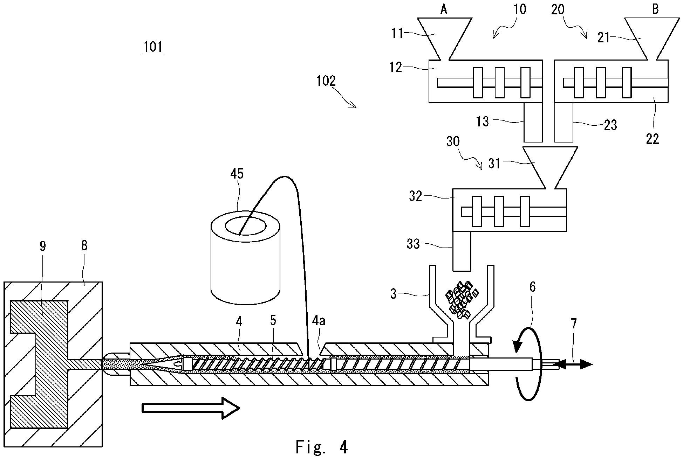

Fig. 4 is a cross-sectional diagram showing an example of an injection molding machine according to another example of the first embodiment. As shown in Fig. 4, the cylinder 4 of the injection molding machine 101 includes a feeding port 4a. Glass fibers and carbon fibers are fed from a roving 45 such as a glass roving or a carbon fiber roving into the feeding port 4a. The glass fibers and carbon fibers are mixed into the molten raw material. In this way, a filler can be mixed into a molded article injection-molded by the injection molding machine 101. For example, the filler can be mixed so that the concentration of the filler of the molded article becomes 20 wt% to 40 wt%.

Next, effects of this embodiment will be described. In this embodiment, each of the weight-type feeders 10 and 20 continuously supplies a predetermined weight of raw material to the hopper 31 of the volume-type feeder 30. As a result, the weight-type feeders 10 and 20 can suppress the occurrence of variations which would otherwise occur, for example, before the discharging of the raw material. Therefore, unlike the comparative example, the weight-type feeders 10 and 20 do not operate intermittently in synchronization with the intermittent operations of the injection molding machine 1, so that it is possible to supply a predetermined amount of raw material to the volume-type feeder 30 in a stabled manner. Further, a raw material containing materials at a desired mixing ratio can be supplied to the volume-type feeder 30.

The volume-type feeder 30 supplies the raw material to the injection molding machine 101. The volume-type feeder 30 performs intermittent operations in synchronization with the intermittent operations of the injection molding machine 101. Even in this case, since each of the weight-type feeders 10 and 20 supplies a predetermined amount of raw material to the volume-type feeder 30 in a stabled manner, it is possible to supply a predetermined amount of raw material and materials having a desired mixing ratio to the injection molding machine 101 in a stabled manner, and thereby to reduce the variations in the measuring time (e.g., weighing time).

### (Second Embodiment)

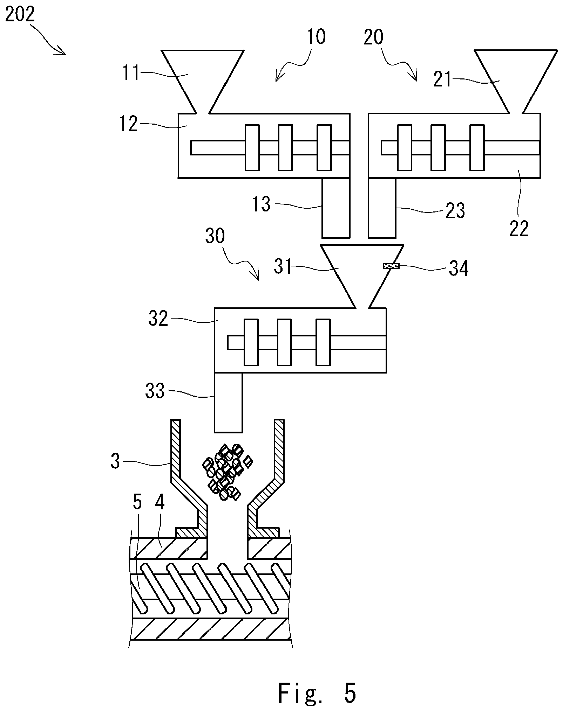

Next, an injection molding machine and a feeder according to a second embodiment will be described. The feeder according to this embodiment includes a detection sensor that detects the amount of raw material charged in the hopper 31 of the volume-type feeder 30. Fig. 5 is a cross-sectional diagram showing an example of a feeder in the injection molding machine according to the second embodiment. As shown in Fig. 5, a feeder 202 according to this embodiment includes a detection sensor 34. The detection sensor 34 detects the amount of raw material charged in the hopper 31. For example, the detection sensor 34 may detect that the hopper 31 is fully filled with the raw material or detect that the volume of material has reached a predetermined volume in the hopper 31. For example, when the detection sensor detects a predetermined amount of material charged in the hopper, the weight-type feeders 10 and 20 stop the discharging of the raw material from the discharging ports 13 and 23. In this way, it is possible to prevent the hopper 31 from being overflowed with the raw material.

Examples of types of the detection sensor 34 include a paddle type, a laser type, a vibration type, a weight type, and a capacitance type. Note that the type of the detection sensor 34 is not limited to a paddle type, a laser type, a vibration type, a weight type, and a capacitance type as long as it can detect the amount of raw material charged in the hopper 31. The paddle type is a sensor that detects the amount of raw material charged in the hopper by using a plate-like fin(s). The laser type is a sensor that detects the amount of raw material charged in the hopper based on the reflection of laser light. The vibration type is a sensor that detects the amount of raw material charged in the hopper by detecting vibrations of a rod-like sensing member that is brought into contact with the material. The weight type is a sensor that detects the amount of raw material charged in the hopper 31 as a weight disposed inside the hopper 31 comes into contact with the material. The capacitance type is a sensor that detects the amount of raw material charged in the hopper by detecting the friction or capacitance of a rod-like sensing member that is brought into contact with the material.

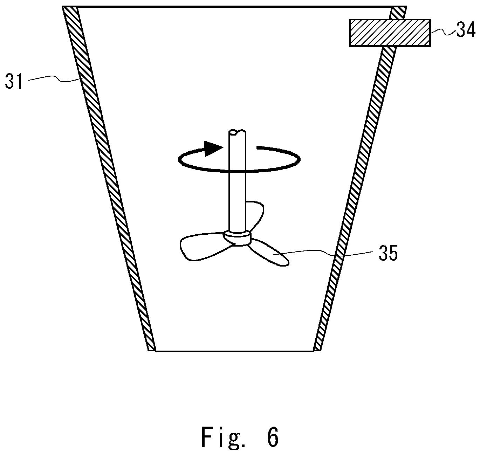

Fig. 6 is a cross-sectional diagram showing an example of a hopper 31 in an injection molding machine 201 according to the second embodiment. As shown in Fig. 6, a stirrer 35 that stirs the raw material may be provided inside the hopper 31. Examples of types of the stirrer 35 include a propeller type, a paddle type, a Pfaudler type, and a disk turbine type. The propeller type has such a shape that a plurality of blades are supported on a shaft. The paddle type has such a shape that a plurality of vertical or inclined paddles are supported on a shaft. The Pfaudler type has such a shape that a plurality of curved blades are supported on a shaft. The disk turbine type has such a shape that a plurality of blades are vertically mounted over a disk supported on a shaft. Note that the type of the stirrer 35 is not limited to a propeller type, a paddle type, a Pfaudler type, a disk turbine type. That is, other types of stirrers or the like can be used as long as they can stir the raw material in the hopper 31. By the stirrer 35, it is possible to make the mixing ratio of the materials uniform in the raw material in the hopper 31 and prevent the materials contained in the raw material from being classified (i.e., separated).

Further, when the detection sensor 34 detects a predetermined amount of material charged in the hopper, the stirrer 35 may stir the raw material. For example, the amount of raw material sufficient for the blades of the stirrer 35 to come into contact therewith is defined as a minimum value, and the amount of raw material with which the hopper 31 overflows as the stirrer 35 stirs the raw material is defined as a maximum value. Then, when the detection sensor 34 detects the amount of material charged in the hopper in a range from the minimum value to the maximum value, the stirrer 35 may stir the raw material.

According to this embodiment, it is possible to detect the amount of raw material charged in the hopper 31 by the detection sensor 34. Therefore, it is possible to stop the continuous supply by the weight-type feeders 10 and 20 when the amount of material in the hopper 31 reaches a predetermined amount such as its full capacity. In this way, if the balance between the amount of raw material supplied from the weight-type feeders 10 and 20 to the volume-type feeder 30 and the amount of raw material supplied from the volume-type feeder 30 to the injection molding machine 201 comes undone, the detection sensor 34 detects this imbalance, and hence the weight-type feeders 10 and 20 can be stopped. In this way, it is possible to adjust the supply of the raw material so that the hopper 31 does not overflow.

Further, when the detection sensor 34 detects the predetermined amount of material charged in the hopper, the raw material can be stirred by the stirrer 35. In this way, the uniformity of the materials contained in the raw material can be improved. In this way, even when the continuous supply by the weight-type feeders 10 and 20 is stopped and hence the suppression of the variations in the supply from the weight-type feeders 10 and 20 is sacrificed, the uniformity of the materials in the hopper 31 can be improved.

### (Third Embodiment)

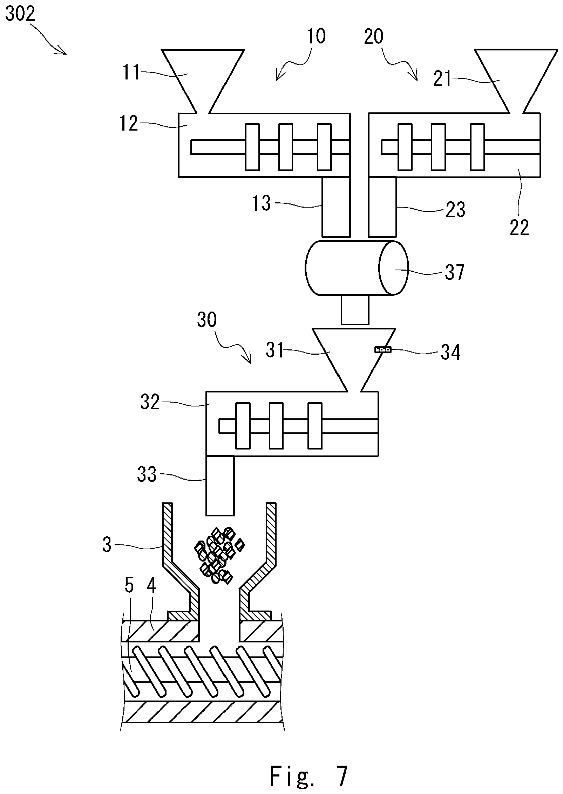

Next, an injection molding machine and a feeder according to a third embodiment will be described. Fig. 7 is a cross-sectional diagram showing an example of a feeder in an injection molding machine according to the third embodiment. As shown in Fig. 7, the feeder 302 according to this embodiment includes a blender 37. The blender 37 is disposed between the discharging ports 13 and 23 and the hopper 31. The blender 37 mixes raw materials including a plurality of materials such as a material A and a material B. Examples of the types of the blender 37 include a container rotating type, a stirring type, and a composite type. The container rotating type is a blender that mixes materials contained in a raw material by rotating the container. The stirring type is a blender that mixes materials contained in a raw material as a stirrer such as a blade(s) stirs the materials. The composite type is a blender that mixes materials contained in a raw material by using both a screw and a stirrer. By mixing the materials by the blender 37, it is possible to prevent the materials contained in the raw material from being classified (i.e., separated), and thereby to improve the uniformity of the mixing ratio.

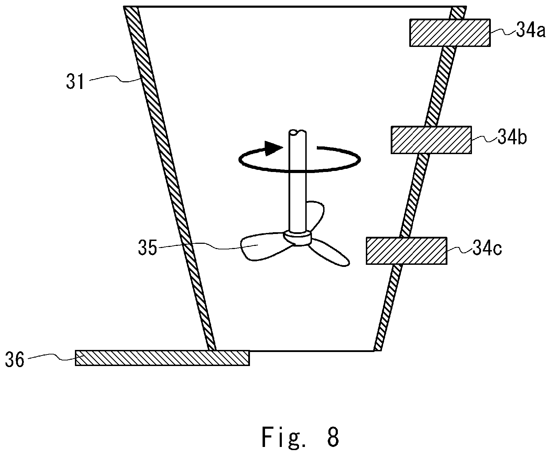

Fig. 8 is a cross-sectional diagram showing an example of a hopper 31 in an injection molding machine according to the third embodiment. As shown in Fig. 8, a feeder 302 may include a shutter 36. The shutter 36 is disposed at the bottom of the hopper 31. The shutter 36 blocks the discharging of the raw material from the hopper 31. Therefore, the amount of raw material charged in the hopper 31 can be adjusted. For example, when the amount of the raw material in the hopper 31 is decreasing, the amount of material charged in the hopper can be increased by closing the shutter 36. Conversely, when the amount of the raw material in the hopper 31 is increasing, the amount of material charged in the hopper can be reduced by opening the shutter 36. In this way, it is possible to continue the continuous discharging of the raw material by the weight-type feeders 10 and 20.

Further, the feeder 302 includes a plurality of detection sensors 34a, 34b and 34c. The plurality of detection sensors 34a, 34b and 34c can detect different amounts of raw material charged in the hopper 31, respectively. For example, the detection sensor 34a detects the maximum amount of raw material charged in the hopper with which the hopper 31 does not overflow. The detection sensor 34c detects the minimum amount of raw material charged in the hopper which the stirrer 35 can stir. Therefore, when the detection sensor 34a detects the upper surface of the raw material, the discharging of the raw material from the weight-type feeders 10 and 20 is stopped. When the detection sensor 34c detects the upper surface of the raw material, the stirring of the stirrer 35 is stopped. In this case, for example, the shutter 36 may be closed and the raw material may be charged into the hopper 31 until the stirrer 35 can stir the material.

According to this embodiment, since the blender 37 is provided, the uniformity of the mixing ratio of the materials can be improved. Further, since the shutter 36 is provided, the amount of raw material charged in the hopper 31 can be adjusted as appropriate. The rest of the configuration and effects are the same as those described in the descriptions of the first and second embodiments.

The present invention is not limited to the above-described embodiments, and needless to say, various modifications can be made without departing from the spirit and scope of the present invention.

This application is based upon and claims the benefit of priority from Japanese patent application No. 2022-032299 filed on March 3, 2022, the disclosure of which is incorporated herein in its entirety by reference.

### Reference Signs List

1, 101 INJECTION MOLDING MACHINE
2, 102, 202, 302 FEEDER
3 HOPPER
4 CYLINDER
4a FEEDING PORT
5 SCREW
6 ROTATIONAL DRIVING UNIT
7 INJECTION DRIVING UNIT
8 MOLD
9 CAVITY
10, 20 WEIGHT-TYPE FEEDER
11, 21 HOPPER
12, 22MAIN PART
13, 23 DISCHARGING PORT
30 VOLUME-TYPE FEEDER
31 HOPPER
32 BODY PART
33 DISCHARGING PORT
34, 34a, 34b, 34c DETECTION SENSOR
35 STIRRER
36 SHUTTER
37 BLENDER
41 GENERAL-PURPOSE RESIN PELLET
42 RESIN POWDER
43 MILLED FIBER
44 CHOPPED FIBER
45 ROVING

## Claims

1. A feeder comprising:
a weight-type feeder including a first hopper to which a raw material is supplied, and a first discharging port from which the raw material is discharged; and
a volume-type feeder including a second hopper to which the raw material discharged from the first discharging port is supplied, and a second discharging port from which the raw material is discharged.

2. The feeder according to claim 1, wherein
the volume-type feeder repeats the discharging of the raw material from the second discharging port and stopping of the discharging, and
the weight-type feeder continuously discharges the raw material from the first discharging port to the second hopper during a predetermined continuous period during which the discharging and the stopping thereof are performed.

3. The feeder according to claim 1 or 2, further comprising a detection sensor configured to detect an amount of the raw material charged in the second hopper, wherein
when the detection sensor detects a predetermined first amount of material charged in the second hopper, the weight-type feeder stops the discharging of the raw material from the first discharging port.

4. The feeder according to any one of claims 1 to 3, further comprising:
a detection sensor configured to detect an amount of the raw material charged in the second hopper; and
stirring means for stirring the raw material in the second hopper, wherein
when the detection sensor detects a predetermined second amount of material charged in the second hopper, the stirring means stirs the raw material.

5. The feeder according to any one of claims 1 to 4, further comprising:
a detection sensor configured to detect an amount of the raw material charged in the second hopper; and
a shutter disposed at a bottom of the second hopper and configured to block the discharging of the raw material from the second hopper, wherein
when the detection sensor detects a predetermined third amount of material charged in the second hopper, the shutter blocks the discharging of the raw material.

6. The feeder according to any one of claims 1 to 5, wherein
the weight-type feeder including the first hopper and the first discharging port is a first weight-type feeder,
the raw material containing a first material is supplied to the first hopper of the first weight-type feeder supplies,
the feeder further comprises a second weight-type feeder including a third hopper to which the raw material containing a second material is supplied, and a third discharging port from which the raw material is discharged, and
the raw material discharged from the third discharging port is also supplied to the second hopper of the volume-type feeder, and the volume-type feeder discharges the raw material into which the first and second materials are mixed from the second discharging port.

7. The feeder according to claim 6, further comprising a blender disposed between the first and third discharging ports and the second hopper, and configured to mix the raw material containing the first and second materials.

8. The feeder according to any one of claims 1 to 7, wherein the raw material contains a plurality of materials having different bulk densities.

9. An injection molding machine comprising a feeder according to any one of claims 1 to 8.
